# EUROPEAN PATENT APPLICATION

(11) **EP 1 293 288 A1**
(43) Date of publication of application: **19.03.2003**
(21) Application number: 02025240.9
(22) Date of filing: 15.02.2001
(51) Int. Cl.: B23P 6/00, B23K 20/12

(54) **Friction stir welding method for welding two workpieces along a continuous ring**

(30) Priority: 06.03.2000 JP 2000060202; 19.10.2000 JP 2000318730
(62) Divisional of application: 01301335.4
(71) Applicant: Hitachi, Ltd., Chiyoda-ku, Tokyo 101-8010 (JP)
(72) Inventor: Ezumi, Masakuni, Kudamatsu-shi, Yamaguchi 744-0002 (JP); Fukuyori, Kazushige, Kudamatsu-shi, Yamaguchi 744-0031 (JP); Mizusaki, Tsuyoshi, Kudamatsu-shi, Yamaguchi 744-0011 (JP)
(74) Representative: Paget, Hugh Charles Edward

(57) **Abstract**

A friction stir welding method in which members (70,76) to be welded progressively along a welding line (79) including a ring or continuous loop (79) are fixed to a support (20) and are friction stir welded by means of a tool (50) rotating on an axis, wherein after completion of the welding of the ring or loop, the friction stir welding is continued to an end point inside or outside the ring or loop, and wherein, after the friction stir welding, a portion of at least one of the joined members, including the end point of the friction stir welding is removed.

## Description

### Background of the Invention

### Technical Field

The present invention relates to a friction stir welding method, a welding body produced by friction stir welding and apparatus for carrying out the method. The invention particularly relates to a circular or other continuous loop path weld.

### Prior Art

As shown in EP-A-0797043, friction stir welding is a method in which by rotating a round rod (here called a "rotary tool") which is inserted into the welding zone and moving the rotary tool along the welding line, the welding zone is heated, softened and plastically fluidised and is solid-state welded.

The rotary tool has a small diameter portion (here called a "pin") which is inserted into the welding zone and a large diameter portion (here called a "shoulder") which is positioned at one end of the small diameter portion. The small diameter portion and the large diameter portion of the rotary tool have the same axis.

In JP-A-11-197855, there is disclosed a welding method in which a welding line of two members has a ring shape (a circular shape). After the start end and the finish end of the welding have overlapped, the finish end is terminated inside or outside the welding line. Accordingly, when the friction stir welding is finished and the rotary tool is withdrawn from a member subjected to the welding, a hole corresponding to the pin of the rotary tool is left in the member, causing a strength problem.

Furthermore, the rotary tool is inserted inclined to the surface of the members. The inclination direction relative to the movement direction of the rotary tool is such that the pin of the rotary tool is positioned in a front of the shoulder of the rotary tool. In other words, the rotary tool is inclined rearwardly, as illustrated in EP-B-0752926. In the method of JP-A-11-197855, the inclined rotary tool is moved in a circular path, but this movement is difficult. To achieve various kinds of circular or other loop paths, it is conceivable that the welding is carried out using a numeric control type machine tool. In this machine tool, the member to be subjected to the welding is fixed to a table, the rotary tool is installed on a main shaft, the main shaft is inclined, and the main shaft is moved in the circular path. However, to maintain a predetermined inclination angle of the main shaft in a circular movement direction, it is necessary to vary the inclination angle while moving the tool, so that preparation of programs is not easy.

### Summary of the Invention

An object of the present invention is to provide a friction stir welding method in which welding in a path of ring shape, e.g. circular shape, or a part ring or a circular arc, can be carried out easily.

According to the invention in one aspect there is provided a method of friction stir welding in which members to be welded progressively along a welding line are fixed to a support and are friction stir welded by means of a tool rotating on an axis and having a small diameter end portion and a larger diameter portion adjacent the end portion, both portions being coaxial with said axis, wherein during the friction stir welding the axis of the tool is inclined relative to the welding line such that in the direction of welding along the welding line the end portion is advanced with respect to the larger diameter portion, and during at least part of the friction stir welding said support is rotated about an axis which is inclined relative to the axis of the rotary tool.

According to the invention in a second aspect there is provided a method of friction stir welding wherein first and second members are joined by friction stir welding carried out along a continuous welding line including a ring or continuous loop and after completion of the welding of the ring or loop the friction stir welding is continued to a point inside or outside the ring or loop and wherein after the friction stir welding a portion of at least one of the joined members including the end point of the friction stir welding is removed.

According to the invention in a third aspect there is provided a method of friction stir welding wherein first and second members are joined by means of a rotating friction stir welding tool wherein said tool is drawn out of at least one of the members in its axial direction.

According to the invention in a fourth aspect there is provided a welded body having first and second members joined along a continuous welding line of ring or loop shape by friction stir welding carried out from one face of the body, said welding line further having an extension continuing to a location on said face which is inside or outside said ring or loop.

According to the invention in a fifth aspect there is provided a machine tool for friction stir welding having a workpiece support for mounting members to be welded, rotatable about a first axis, and a tool drive shaft for carrying at an end thereof a friction stir welding tool and rotating said tool about a second axis, wherein said first and second axes are relatively inclinable so that the tool axis is inclined to the plane in which said members are rotated by the rotation of the support.

Preferred optional features are set out in the dependent claims.

### Brief Description of the Drawings

Embodiments of the invention will now be described by way of non-limitative example with reference to the accompanying drawings, in which:
Fig. 1 is a side view of a friction stir welding apparatus of one embodiment according to the present invention;
Fig. 2 is a flow chart of a welding process of one embodiment according to the present invention;
Fig. 3 is a plan view of members before welding;
Fig. 4 is a longitudinal cross-sectional view of Fig. 3;
Fig. 5 is a plan view of the members after welding;
Fig. 6 is a cross-sectional view on line VI-VI of Fig. 5; and
Fig. 7 is the same cross-sectional view as Fig. 6, after one member has been partly cut off after the welding.

### Description of the Embodiments

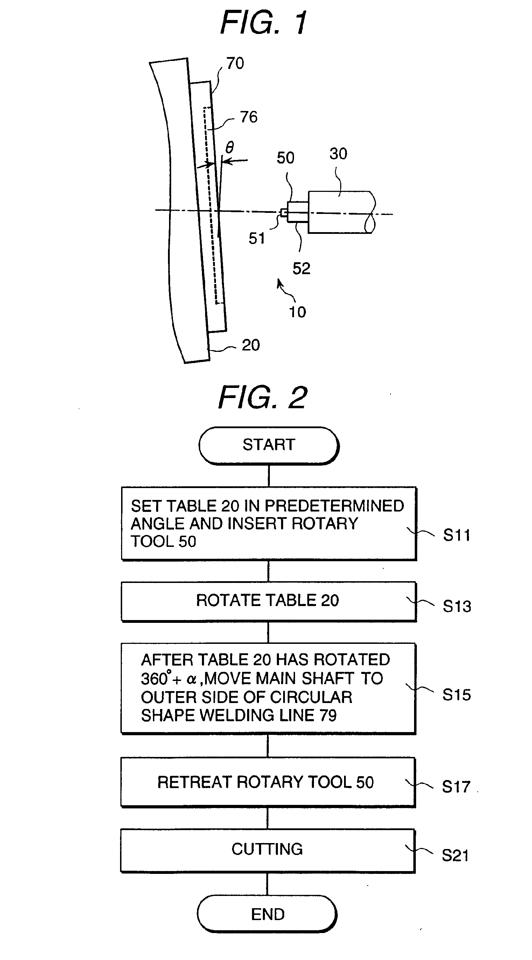

A friction stir welding method of one embodiment of the present invention will be explained referring to Figs. 1 to 7. Fig. 1 shows generally a numeric control type machine tool 10 typically called a machining centre. The machine tool 10 comprises a table 20 for mounting members to be subjected to welding, and a rotatable main shaft 30 for a tool to carry out the welding. The machine tool of the embodiment is a lateral axis type in which the axis of the main shaft 30 is horizontal. The face of the table 20 for mounting the members to be welded thus lies approximately vertical, but can be inclined. The table 20 can be rotated about its approximately horizontal central axis. In the invention alternatively the main shaft axis may be for example vertical.

On the tip end of the main shaft 30, a rotary cutter tool and a friction stir welding rotary tool 50 (shown in Fig. 1) can be installed. The tip end of the rotary tool 50 is directed at a side portion of the table 20. The main shaft 30 can move in its axial direction, and can move in a radial direction relative to the axial direction.

The machine tool 10 has a tool stocking device comprised of plural cutter tools and plural friction stir welding tools, and an automatic exchange device for exchanging a specified tool between the tool stocking device and the main shaft.

A member 70 to be subjected to welding is fixed to the table 20 in a conventional manner. The member 70 has a circular recess 71 at its side facing the main shaft 30. At the edge of the recess 71, there is a step 72. The step 72 and the front outer face of the member 70 adjacent the step are substantially parallel and flat and are perpendicular to the axis of the circular path to be welded.

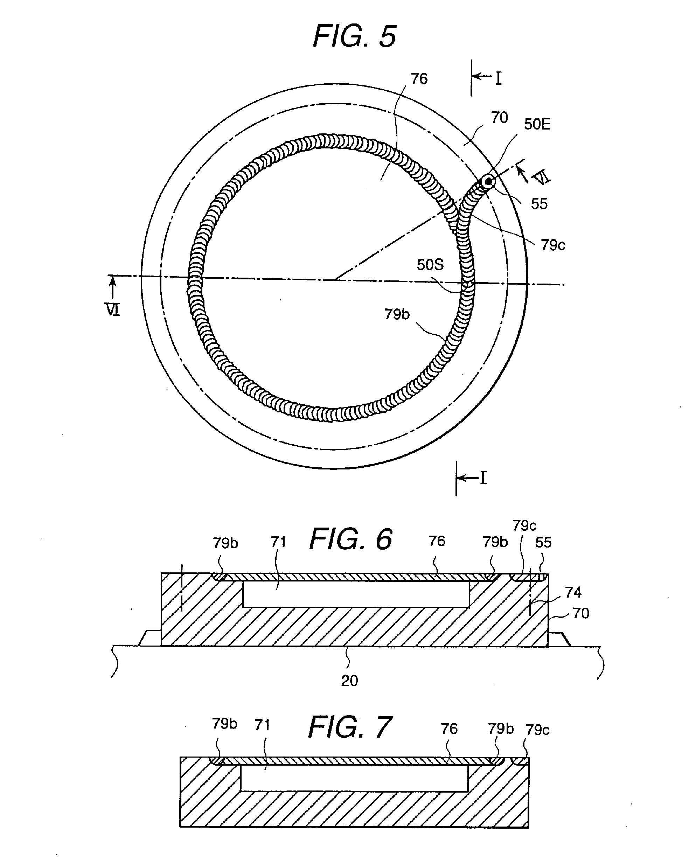

On the step 72 a circular plate-shape cover 76 is seated. The front outer face of the member 70 and the outer face of the cover 76 are flush (co-planar). A butt portion thus exists between the circular periphery of the cover 76 and the circular periphery of the step 72, at which the friction stir welding is performed. The welding line 79 is thus in a ring, specifically a circular shape. In Fig. 5 there is seen a welding bead 79b which is formed by the welding.

The butt portion between the member 70 and the cover 76 is first joined intermittently by temporary arc welding. After the temporary arc welding, the member 70 is fixed to the table 20 and the friction stir welding is carried out. After the friction stir welding, the space formed by the recess 71 and the cover 76 forms a cooling passage of a product being manufactured. An inlet and an outlet of the cooling passage are not shown. The member 70 and the cover 76 form a part of a cooling device. The materials of the member 70 and the cover 76 are aluminum alloys.

The table 20 can be rotated about the centre of the circular welding line 79 as a rotation centre. The rotary tool 50 fixed to the main shaft 30 does not move (rotate) in the circumferential direction of the welding line 79. By the rotation of the table 20, the rotary tool 50 can be moved relatively to the welding line 79.

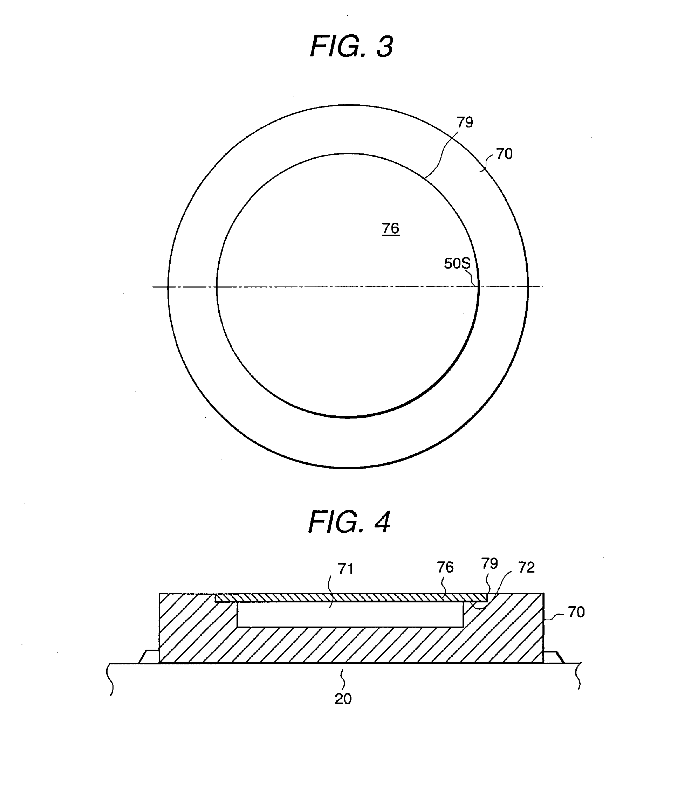

The rotary tool 50 fixed to the main shaft 30 is positioned at a position 50S which is one position in a horizontal direction of the welding line 79. At this position 50S, the table 20 is inclined with respect to the relative movement direction of the rotary tool 50 during the friction stir welding. The inclination direction is such that in this movement direction the pin 51 of the rotary tool 50 is in front of the shoulder 52 (more specifically the centre axis of the pin is generally forward with respect to the centre of the shoulder). When the table is made to the standard, in the rotation direction of the table 20, the small diameter portion 52 side of the axial centre of the rotary tool is to position in a rear position from the large diameter portion 51 side of the rotary tool 50. The inclination angle θ of the table 20 is three (3) degrees, for example. In Fig. 3 and Fig. 5, the rotary tool 50 is positioned in one of the horizontal positions 50S of the circular welding line 79, and since the table 20 is rotated clockwise, the upper side of the table 20 (the member 70) is inclined away relative to the lower side with respect to the rotary tool 50.

A welding process will be explained. The member 70, in which the cover 76 is fixed by the temporary welding, is fixed to the table 20 which is inclined at three degrees as described. The rotary tool 50 is positioned in the predetermined position 50S. While rotated on its own axis by the main shaft 30, the rotary tool 50 is advanced in the axial direction, to bring the pin 51 of the rotary tool 50 into the butt portion. When the rotary tool 50 is inserted by a predetermined amount the advance is stopped. The position 50S is the start point of the welding (step S11 in Fig. 2).

Next, while the inclination angle of 3 degrees is maintained, the table 20 is rotated. The rotation direction of the table 20 is the left-rotation (step S13). A centre of the rotation of the table 20 is a centre of the welding line 79. Accordingly, the rotating tool 50 is moved relatively along the welding line 79 and the butted portion is welded by circular path friction stir welding, to form the welding bead 79b.

The rotation of the table 20 is continued, even when the table 20 has rotated 360 degrees, so that from the start point 50S of the welding friction stir welding is carried out again. When the table 20 has rotated by a predetermined angle 360 degrees + α, the main shaft 30 is moved in the radial direction (step S15), to outside the circular welding line 79, while table 20 continues its rotation. The inclination angle θ of the table is not varied. Accordingly, an arc shape welding bead 79c is formed outside the line 79. The inclination angle θ of the rotary tool 50 with respect to the relative movement direction of the rotary tool 50 from the angle 360 degrees + α (from where the main shaft 30 starts move in the radial direction) must be the above stated three degrees. Herein, since this portion is not the portion to be subjected to the friction stir welding, normal precision friction stir welding is not required.

When the rotary tool 50 has moved to a predetermined position 50E, the main shaft 30 (with the rotary tool 50) is retreated and the tool 50 is withdrawn axially from the member 70. The retreat position of the main shaft 30 is judged in dependence on the movement of the main shaft 30, and is within the outer diameter of the member 70. At the position (the finish point of the welding) in which the rotary tool 50 is withdrawn from the member 70, a hole 55, which corresponds to an outer diameter of the pin 51 of the rotary tool 50, is left.

After the friction stir welding has finished, the member 70 is taken off, and by another machine tool an unwanted portion of the member 70 is cut off at the line 74 in Figs. 5 and 6 on a circle outside the circular welding line 79 (step S21). This removes the hole 55. Further, when burrs are formed at the welding portion, or recesses are produced, the upper face in Fig. 6 is processed e.g. by cutting or grinding. As a result, the hole 55 in the welding finish portion is removed, and the welded face is made flat so that a good product appearance can be obtained.

In this method, it is unnecessary to incline the rotary tool 50 and to move the rotary tool 50 in a circular path. Using a machine tool which cannot incline its main shaft 30, the friction stir welding can nevertheless be carried out. Further, even if the main shaft 30 is able to incline, it is not necessary to design a program for maintaining the predetermined angle θ in the circular path. Accordingly, by the present invention, using an existing machine tool, friction stir welding can be performed at low cost and easily.

The cutting of the workpiece after welding can be done as required. For example the hole 55 at the finish point of the welding may be penetrated by a drill, and the hole can be formed as a hole for a bolt or the like. Alternatively the hole 55 is buried by TIG (Tungsten Inert Gas) welding, and the welded face is cut off. The welding rod for the TIG welding may be of the same material as the member 50, so that the weld at the hole is hardly seen even if there is no coating.

At the side towards the main shaft 30, an optical sensor for detecting the position of the butt portion may be provided, and the output of this sensor used to move the main shaft 30. The moving direction of the main shaft 30 is perpendicular to the moving direction due to the rotation of the table 20. Accordingly, even if the accuracy of a first member 70 and of a second member 76 in the butt portion (the joining line 79) is poor, the axial centre of the rotary tool 50 can be positioned in the centre of the butt portion.

The welding line may be circular, a ring shape (continuous) curved line (which may include straight portions), a non-continuous circular line, and a non-continuous free curved line. In the case of the free curved line, the table 20 can be rotated with the centre of the circular arc of the welding portion as a centre and the table 20 may be moved in a linear manner. Since the machine tool is of the numeric control type, the welding can be carried out easily corresponding to the various curved lines. The hole 55 of the finish point of the welding in the case of the circular line may be buried by welding or soldering. Further, it is possible to perform a ring shape welding in which the welding line comprises for example four linear (straight) sides. In this case, for the welding of each of the four sides, the table is moved linearly. For the welding of the intersections of the sides or of small circular arc portions in the vicinity of the intersections, the table 20 is rotated.

Further, instead of welding of a butt portion, two members which are overlapped can be welded. A longitudinal type machine tool may be employed.

If the welding line has a finish point inside the circular welding line, for example, the inside portion may be removed by a counter boring process.

The rotary tool 50 is inclined relative to the moving direction, and the rotation for the relative movement is carried out by the table 20. Since the inclination of the rotary tool 50 and the circular movement of the rotary tool 50 are separated, the welding can be carried out at low cost and easily.

After completion of the friction stir welding, while the member 70 is still fixed to the table 20, the rotary tool 50 of the main shaft 30 may be exchanged for a rotary cutting tool, by an automatic exchanging device between the main shaft 30 and a tool stocking device. By rotating the cutting tool, an unnecessary portion of the workpiece is cut off. If the friction stir welding is carried out after such cutting, the oil for the cutting and the oil for cleaning after the cutting have a bad effect on the friction stir welding. Further, by the residual stock removal the combination accuracy in the two members may become poor. However, if the cutting is after the friction stir welding, these problems are avoided. If the cutting of the two members is carried out before the friction stir welding by another machine, however, the removal of the cutting use oil may be performed sufficiently. Instead of cutting, for example, there may be an enlargement to a desirable diameter of the hole 55 during the retreat of the rotary tool 50 and further a screw cutting process.

In another method, friction stir welding of a pair of the members is carried out using a first rotary tool, then the rotary tool is exchanged between the main shaft and the tool stocking device, and friction stir welding of a second welding portion of the members is carried out using a second rotary tool.

The following numbered paragraphs contain statements of combinations of technical features of the disclosure.
1. A method of friction stir welding in which members (70,76) to be welded progressively along a welding line (79) are fixed to a support (20) and are friction stir welded by means of a tool (50) rotating on an axis and having a small diameter and portion (51) and a large diameter portion (52) adjacent the end portion, both portions (51,52) being coaxial with said axis, wherein during the friction stir welding the axis of the tool is inclined relative to the welding line such that in the direction of welding along the welding line the end portion (51) is advanced with respect to the larger diameter portion (52), and during at least part of the friction stir welding said support (20) is rotated about an axis which is inclined relative to the axis of the rotary tool.
2. A method according to paragraph 1, wherein the rotation of the support (20) causes advance of the tool (5) along the welding line while maintaining constant the inclination of the axis of the tool relative to the welding line.
3. A method according to paragraphs 1 or 2, wherein the axis of the tool (50) is vertical or horizontal.
4. A method according to any one of paragraphs 1 to 3, wherein the tool (50) is mounted on a tool drive shaft of a numeric control type machine tool.
5. A method according to any one of paragraphs 1 to 4, wherein during the friction stir welding there is performed linear movement of said support (20) relative to the axis of the tool (50), in addition to the rotary movement of the support (20).
6. A method according to paragraph 5, wherein the linear and rotary movements of the support are independent or separate.
7. A method according to any one of paragraphs 1 to 6, wherein the zone to be welded is detected by means of a sensor fixed relative to the axis of the tool, and the axis of the tool and the support (20) are moved relatively to position the tool in dependence on the sensor output.
8. A method according to any one of paragraphs 1 to 7, wherein the axis of the tool and the rotary axis of the table are inclined to each other at an angle of not more than 10°.
9. A method according to paragraph 8, wherein the axis of the tool and the rotary axis of the table are inclined to each other at an angle in the range 1 to 5°.
10. A method according to any one of paragraphs 1 to 9, wherein the welding line extends in a plane and the rotary axis of the support is perpendicular to said plane.
11. A welded body having first and second members joined along a continuous welding line (79) of ring or loop shape by friction stir welding carried out from one face of the body, said welding line further having an extension (79c) continuing to a location (55) on said face which is inside or outside said ring or loop.
12. A machine tool for friction stir welding having
   a workpiece support (20) for mounting members to be welded, rotatable about a first axis, and
   a tool drive shaft (30) for carrying at an end thereof a friction stir welding tool (50) and rotating said tool (50) about a second axis,
   wherein said first and second axes are relatively inclinable so that the tool axis is inclined to the plane in which said members are rotated by the rotation of the support.
13. A machine tool according to paragraph 12, wherein said end of the shaft (30) is movable along said second axis.
14. A machine tool according to paragraph 12 or 13, wherein said shaft (30) is movable radially with respect to the second axis during the rotation of the support.
15. A machine tool according to any one of paragraphs 12 to 14, wherein said support is movable to shift said first axis radially during the rotation of the support.
16. A machine tool according to any one of paragraphs 12 to 15, wherein one of (a) a face of said table on which said members are mounted and (b) said second axis is fixed to be horizontal or vertical, and the other of (a) and (b) is inclinable relative thereto.

## Claims

1. A method of friction stir welding wherein first and second members (70,76) are joined by friction stir welding carried out along a continuous welding line (79) including a ring or continuous loop and after completion of the welding of the ring or loop the friction stir welding is continued to an end point inside or outside the ring or loop, and wherein after the friction stir welding a portion of at least one of the joined members including the end point of the friction stir welding is removed.

2. A method according to claim 1, wherein said first and second members have surfaces laterally butted together at the welding line.

3. A method according to claim 1, wherein said first and second members are overlapping at the welding line.

4. A method of friction stir welding wherein first and second members (70,76) are joined by means of a rotating friction stir welding tool (50) wherein said tool is drawn out of at least one of the members in its axial direction, wherein a hole (55) formed by the drawing out of the tool is filled with substantially the same material as that of the member or members in which it is formed, by TIG welding.
